# EUROPEAN PATENT SPECIFICATION

(11) **EP 0 935 637 B1**
(45) Date of publication and mention of the grant of the patent: **28.05.2003**
(21) Application number: 97913951.6
(22) Date of filing: 03.11.1997
(51) Int. Cl.: C08L 25/06, C08L 67/02, C08L 77/00, C08K 3/00

(54) **COMPATIBILIZED BLENDS OF SYNDIOTACTIC POLYSTYRENE WITH FURTHER THERMOPLASTIC POLYMERS**
VERTRÄGLICHE ZUSAMMENSETZUNGEN AUS SYNDIOTAKTISCHEM POLYSTYROL UND WEITEREN THERMOPLASTISCHEN POLYMEREN
MELANGES RENDUS COMPATIBLES DE POLYSTYRENE SYNDIOTACTIQUE AVEC D'AUTRES POLYMERES THERMOPLASTIQUES

(30) Priority: 04.11.1996 US 30412 P
(43) Date of publication of application: 18.08.1999
(73) Proprietor: E.I. DU PONT DE NEMOURS AND COMPANY, Wilmington Delaware 19898 (US)
(72) Inventor: FLEXMAN, Edmund, Arthur, Wilmington, DE 19810 (US); KIRCHNER, Olaf, N., Wilmington, DE 19807 (US); SUBRAMANIAN, Pallatheri, Manackal, Hockessin, DE 19707 (US)
(74) Representative: Carpmaels & Ransford
(86) International application number: US9719886
(87) International publication number: WO98020070

(56) References cited:
- EP-A- 0 384 208
- EP-A- 0 422 495
- EP-A- 0 591 823
- EP-A- 0 771 833
- EP-A- 0 775 728
- EP-A- 0 784 076

## Description

### BACKGROUND OF THE INVENTION

This invention relates to blends of syndiotactic polystyrene with thermoplastic polymers which are compatibilized to provide improved properties. More particularly, the invention relates to syndiotactic polystyrene, hereinafter referred to as SPS, with polyamides or polyesters compatibilized by compatibilizers as described in detail below which are suitable for preparing articles by melt processing.

It is well known in the art to prepare molded articles from blends of SPS and thermoplastic polymers. Various compatibilizers have been disclosed. Compatibilization of polymer blends usually means preparing a stable, fine dispersion or co-continuous network of one polymer in another and may be defined by a variety of techniques. Improving the compatibilization between the blend components determines, in part, the desirable physical properties of the blend. The utility of polymer blends is often defined by their physical properties, e.g. toughness, stiffness, strength, heat resistance, etc. The toughness of the polymer blends is often limited by the presence of large domains of the dispersed polymer which act as flaws within the molded article. Indicators of improved compatibilization include, for example, increased tensile elongation, reduced delamination tendency, increased ductility and/or improved phase morphology stabilization. The test area of a tensile specimen comprises a large portion of the volume of a molded part in which a few large particles may be present so tensile testing is an often used technique to determine improved compatibility by comparing percent elongation at break.

European patent application EP-A-0591823 describes a thermoplastic resin composition which comprises a styrenic resin comprising a modified styrenic polymer. The styrenic polymer is modified by a compound bonded to its skeleton which has an unsaturated group and a polar group. The polar group may include various salts of carboxylic acids.

European patent application EP-A-0422495 describes a styrene polymer composition comprising a styrene polymer and a polyphenylene ether which is modified by a polar group. The polar group may be an unsaturated carboxylic acid derivatives.

European patent application EP-A-0771833 describes a process for preparing an acid-modified polyphenylene ether. A polystyrenic resin composition is also described. The polystyrenic resin composition is prepared using the acid-modified polyphenylene ether, which may be modified by a metal salt of fumaric acid.

European patent application EP-A-0755728 describes a polystyrenic resin composition comprising a polystyrenic resin, a polyamide resin and a compatibilizer, wherein the compatibilzer has a polar group. The polar group may be a carboxylic acid salt.

European patent application EP-A-0784076 describes a polystyrenic resin composition comprising a styrenic polymer, a thermoplastic resin and a polymer having an affinity with the styrenic polymer which has a polar group. The polar group may include various salts of carboxylic acids.

### SUMMARY OF THE INVENTION

The present invention resides in the discovery that flaws resulting from poorly dispersed particles in blends of SPS and thermoplastic polymers can be significantly reduced or eliminated by fully or partially neutralizing acid functional polyethylene interpolymers which are used as compatibilizers with zinc, magnesium, lithium, or other metal counter ions or combinations of metal counter ions. Alternatively, previously neutralized acidic monomers such as zinc acrylate and the like may be used in the polymerization of previously prepared polymers.

Accordingly, the present invention provides a composition comprising:
(a) at least 1% by weight of a syndiotactic polystyrene;
(b) at least 1% by weight of a thermoplastic resin; and
(c) from 1 to 30% by weight of a compatibilizer which is a polyethylene interpolymer functionalized with a carboxylic acid group which is partially or fully neutralized by a metal counter ion,
wherein the sum of the weight percentages of (a), (b) and (c) equals 100%, and said thermoplastic resin is selected from the group consisting of polyamides and polyesters.

### DETAILED DESCRIPTION

The polystyrene of component (a) is a styrene-based resin with a syndiotactic configuration. The styrene based resin includes polystyrene, poly(alkylstyrene), poly(halogenated styrene), poly(alkoxystyrene), poly(vinyl benzoic ester), and their mixtures or copolymers containing the above polymers as the main components.

Polyamides and polyesters useful in this invention may be prepared from a cyclic ring opening polymerization, a condensation polymerization or a combination thereof. The polyamides or polyesters may be homopolymers, copolymers, terpolymers, or blends of homo and/or copolymers. The polyamides or polyesters may be liquid crystalline in nature. Furthermore, they may be previously compounded with other additives such as tougheners, plasticizers, fillers, reinforcing agents, antioxidants, stabilizers and the like.

The blends of the invention include at least 1% by weight polystyrene at least 1% by weight thermoplastic resin, and from 1 to 30% by weight compatibilizer, based upon the total weight of polystyrene, polyamide or polyester and compatibilizer only, wherein the sum of weight percentages of polystyrene, polyamide or polyester and compatibilizer polymer equal 100%. Preferred compositions contain at least 20% by weight polystyrene, at least 20% by weight thermoplastic resin and 2 to 25% by weight compatibilizer. Particularly preferred compositions contain at least 30% by weight of polystyrene, at least 30% by weight thermoplastic resin and 3 to 20% by weight compatibilizer.

The compatibilizing component of the present invention has an acid functionality which is either fully or partially neutralized by metal counter ions such as zinc, magnesium, manganese, and lithium. Alternatively, previously neutralized monomers such as zinc acrylate and the like may be used in the polymerization.

Included in this invention are blends as set forth above where the morphology is that of one phase dispersed within the other. Also included are blends as set forth above where the morphology is that of a co-continous network.

The blends of this invention may include additives such as lubricants, mold release agents, antioxidants, UV stabilizers, fire retardants, glass fibers and flake, minerals, particulate solids, carbon black, rubber tougheners, nucleants, pigments, antistatic additives, fibers of fluoropolymers and fibers of aramides commonly used in polymers to enhance properties or processing. They may be present in either or both phases.

Fillers which may be added to the blends of this invention include: conductive fillers such as polyaniline and polypyrrole, metal fibers, organic and/or inorganic powders coated with metals, or nanoparticles. Depending on the particular filler selected, up to 50% by weight, based on the total weight of the composition, of filler may be added. Generally, an amount from 5 to 40% will be used.

The blends may be fabricated by extrusion or injection molding or structural foam molding, or gas assisted molding to make hollow injection molded parts. These blends may be extruded into sheets/films which then could be thermoformed to make large and small parts, or the blends may be blowmolded. The blends may also be made into fibers by extrusion processes or melt blown processes. These fibers, optionally combined with reinforcing fillers such as carbon or glass fibers, may be made into paper like sheets, and formed into composite articles. The blends may be used to coat optical fibers via a melt process or a powder coating process. The blends are also useful in encapsulating electrical components, chips, or other microelectronics.

The powders from these blends may be processed by rotational molding.

These blends may be melt fabricated into useful articles. Examples of articles which may be made from the blends of this invention include automotive parts, electronics, electrical and industrial parts. These may also include radiator headers, end tanks, intake manifolds, parts for electronics/electrical applications, overmolded electrical parts, paintable parts such as automotive body parts, electrostatically paintable parts (without additional pretreatment), panels and tubings and parts for plastic heat exchangers, plastic water heaters, insulation, thermoformed parts such as automotive/industrial panels and body parts, encapsulated electrical transformers, light weight panels for electric/hybrid vehicles, and rigid, foamed/thermoformed parts for floating devices such as boats.

### EXAMPLES

The invention is further illustrated by the following examples in which parts and percentages are by weight unless otherwise indicated.

Preparation of samples: Blends were prepared by either mixing and tumbling together pellets or other forms of the ingredients in a plastic bag prior to feeding into the intensive melt mixing device or by co-feeding several of the ingredients independently. Glass is usually co-fed since it usually is incorporated into the compounds part way down the extruder rather than at the rear to minimize fiber attrition.

Melt mixing can be accomplished on any device capable of developing high shear such as an extruder, co-kneaders, continuous Banburys, multiple barrel devices, etc., that possess sufficient length and adequate geometry required for the specific blends. Blends described below were prepared on either a Werner and Pfleiderer 28mm trilobal, corotating twin screw extruder or a Werner and Pfleiderer 30mm bilobal, corotating twin screw extruder. Both used a severe screw design with several sets of neutral kneading blocks followed by a reverse in the rear and a lighter working section including a reverse just prior to the vacuum port. Compounds containing glass were made on the 30mm extruder using a glass side stuffer prior to the vacuum port to incorporate glass. The 28mm extruder was run at 200 rpm and about 9.1 kg (20 pounds) per hour. The 30mm extruder was run either at 200 rpm and about 9.1 kg (20 pounds) per hour or 300 rpm and about 13.6 kg (30 pounds) per hour. All percentages listed are weight per cent of the total composition unless otherwise noted.

Articles may be formed from blends of this invention by the normal methods of thermoplastic forming. Unless otherwise noted, the following blends were molded in a Van Dorn 6 oz. reciprocating screw injection molding machine with 152475 kg (150 tons) clamping pressure and a gear driven screw. A general purpose molding screw was used in the machine, with a 1/8 inch (32 mm) thick tensile bar cavity, a 1/8 inch (32mm) flex bar and a 1/16 inch (16 mm) flex bar cavities in the mold.

The results in the following examples are the per cent elongation at break of 1/8 inch (32 mm) specimens tested by ASTM D 638.

**Table 1**

| | DESCRIPTION |
|---|---|
| SPS A | 300,000 molecular weight neat SPS with %E = 2.7 |
| SPS B | 250,000 molecular weight neat SPS with %E = 2.7 |
| SPS C | rubber toughened SPS with %E = 4.0 |
| SPS D | rubber toughened SPS with %E = 3.6 |
| NYLON A | 66 nylon with Mₙ 16,500 |
| NYLON B | 6 nylon with Mₙ 15,000 |
| NYLON C | 612 nylon with Mₙ 21,000 |
| PRIOR ART COMPATIBILIZER A | maleic anhydride functionalized, hydrogenated sbs block elastomer |
| PRIOR ART COMPATBILIZER B | fumaric acid functionalized ppo (or ppe) |
| PRIOR ART COMPATIBILIZER C | polystyrene containing 5% oxazoline |

### Comparative Example I

Non-hydrogenated SBS block copolymer thermoplastic elastomer (Stereon 857, available from Firestone Rubber Co.) was extruded in a 28mm twin screw extruder at 8.6 kg (19 pounds) per hour, 200 rpm, and with a melt temperature of 230°C. It contained 3% fumaric acid and 0.1% dicumyl peroxide. When compared at the 6% level to prior art compatibilizer A in a formulation of 50% nylon A, 44% SPS C, and 6% compatibilizer, as shown in Table 2 which follows, improved elongation was demonstrated:

**Table 2**

| | |
|---|---|
| Prior Art Compatibilizer A | 7.2% Elongation at break |
| Functionalized SBS | 9.0% |

### Comparative Example 2

In the following experiments, use of other functionalizing monomers are demonstrated. PPO is sometimes referred to as PPE, both are poly-2,6 dimethyl phenylene oxide. They were prepared by passing a mixture of 95% PPO (Mn = 28,000) 5% monomer through a 28mm extruder at 4.5 kg (10 pounds) per hour with a barrel setting of 330°C. These were then mixed with nylon and SPS as indicated in Table 3.

**Table 3**

| FUNCTIONALIZING MONOMER IN FIRST EXTRUSION OF PPO ONLY | NYLON/SPS/PPO RATIO | % ELONGATION |
|---|---|---|
| NONE, CONTROL | 53/47/0 | 2.8 |
| 3% FUMARIC ACID 2% ZINC DIMETHACRYLATE | 50/44/6 | 5.1 |
| 5% ITACONIC ACID | 50/44/6 | 4.0 |
| 5% ACRYLIC ACID | 50/44/6 | 3.0 |

Additional compatibilizers are described in Table 4.

**Table 4**

| COMPATIBILIZER | COMPOSITION |
|---|---|
| A | Polyethylene Glycol 200,000 molecular weight |
| B | poly(ethylene/n-butyl methacrylate/carbon monoxide) 57/33/10 weight per cent |
| C | poly(ethylene/n-butyl methacrylate/methacrylic acid)) 67/22/10 weight per cent |
| D | poly(ethylene/n-butyl methacrylate/methacrylic acid)) 67/22/10 weight percent 50% neutralized with zinc oxide |
| E | poly(ethylene/n-butyl methacrylate/glycidyl methacrylate) 67/28/5 weight per cent |
| F | poly(ethylene/methyl acrylate/acrylic acid) 74/20/6 weight per cent |
| G | poly(ethylene/methacrylic acid) 90/10 weight per cent |
| H | Prior Art Fumaric Acid Functionalized PPO neutralized with Zn |
| I | Plasticizer |

### Example 1

Polyethylene interpolymers functionalized with either partially zinc neutralized carboxylic acid or glycidyl methacrylate can compatibilize SPS with nylon. They even function better than a compatibilizer claimed in the prior art.

**Tablet 5**

| Weight % Nylon A | Weight % SPS A | Weight % Compatibilizer | Compatibilizer | % Elongation |
|---|---|---|---|---|
| 60 | 40 | 0 | - | 4.1 |
| 57 | 38 | 5 | Prior Art Compatibilizer A | 4.6 |
| 57 | 38 | 5 | D | 4.8 |
| | | | | |
| 50 | 44 | 6 | D | 9.2 |

### Example 2

The function of certain types of compatibilizers is improved by neutralization with metal salts such as zinc, lithium, magnesium as demonstrated in the following series of experiments. Other salts such as salts of manganese, sodium and aluminum, may also function in this manner. Due to kinetic limitation in the working zones of the extruder, greater than 100% of the stoichiometric amount of the neutralizing metal salt may be added.

The following series were prepared by blending all ingredients in the rear of the extruder simultaneously. Thus the compatibilizer was being neutralized at the same time it was being dispersed and acting as a dispersing agent.

**Table 6**

| Weight % Nylon A | Weight % SPS C | Weight % Compatibilizer C | Theoretical % Neutralization of Compatibilizer by zinc. | % Elongation |
|---|---|---|---|---|
| 32 | 48 | 20 | 0 | 3.6 |
| 32 | 48 | 20 | 50 | 6.8 |
| 32 | 48 | 20 | 100 | 6.6 |
| 28 | 42 | 30 | 0 | 6.4 |
| 28 | 42 | 30 | 50 | 11.5 |
| 28 | 42 | 30 | 100 | 15.1 |
| 37.5 | 37.5 | 25 | 0 | 8.7 |
| 37.5 | 37.5 | 25 | 50 | 12.1 |
| 37.5 | 37.5 | 25 | 100 | 11.7 |
| 48 | 32 | 20 | 0 | 10.7 |
| 48 | 32 | 20 | 50 | 11.0 |
| 48 | 32 | 20 | 100 | 14.5 |
| 42 | 28 | 30 | 0 | 11.6 |
| 42 | 28 | 30 | 50 | 20.6 |
| 42 | 28 | 30 | 100 | 23.6 |

### Example 3

The table below demonstrates not only the superiority of claimed compatibilizer C over a similar level of equally soft and rubbery prior art compatibilizer A and hard but efficient prior art compatibilizer B, but how compatibilizers can be used in combination with each other.

**Table 7**

| Weight % Nylon A | Weight % SPS | Weight % Compatibilizer | Theoretical % Neutralization of Compatibilizer | % Elongation |
|---|---|---|---|---|
| 0 | 100 D | 0 | - | 3.6 |
| 50 | 44C | 6 prior art B | - | 8.8 |
| 48 | 32 D | 20 prior art A | - | 4.6 |
| 48 | 32 D | 20 C | 100 Zn | 32 |
| 48 | 30 D | 18 C 4 prior art B | 100 Zn | 47 |

### Example 4

The examples below again demonstrate the superiority of compositions of this invention over an equal amount of equally soft and rubbery prior art compatibilizer and that a further increase in elongation is possible in combination with other types of compatibilizers.

**Table 8**

| Weight % Nylon A | Weight % SPS C | Weight % Compatibilizer | Theoretical % Neutralization of Compatibilizer | % Elongation |
|---|---|---|---|---|
| 48 | 32 | 20 Prior Art A | - | 4.6 |
| 48 | 32 | 20C | 100 | 20.3 |
| 48 | 32 | 20D | 50 (neutralized before blending) | 5.9 |
| 48 | 30 | 18 D 4 Prior Art B | 50 (neutralized before blending | 37 |
| 48 | 32 | 20 B | - | 11.2 |
| 48 | 30 | 18 B 4 Prior Art B | - | 15.4 |

### Example 5

Glass is one of the most commonly used additives in injection molded crystalline thermoplastic resins. The presence of short glass fibers increases the modulus yet allows sufficient melt fluidity for injection molding. The increased modulus above their T_{g} and below their Tₘ greatly increases the ability of semicrystalline resins to support a load at elevated temperatures

However the presence of glass reinforcement also greatly decreases ductility. The adhesion to the glass which generates true reinforcement in a tensile strength measurement, reduces the mobility of the molecules to respond to stress by movement, thus the part breaks at lower strain, or elongation. This is particularly true of the more brittle thermoplastics, such as SPS. In addition, blends which embrittle by reason of containing large domains on one resin poorly dispersed in the other, become very brittle when reinforced with glass. Thus finding "good" compatibilizers which allow relatively large portions of brittle and non-polar SPS to be dispersed in ductile, polar nylon or polyesters becomes particularly valuable because all of these resins have high melting points so are capable of being reinforced to give compositions capable of withstanding stress at elevated temperatures.

The following experiments were carried out in a 30mm twin screw extruder with all polymeric components added in the rear unless otherwise noted. Short glass fiber, PPG 3540, was added by means of a side stuffer feeding the glass directly into the melt about two thirds of the length down the barrel. A gentle mixing section just past that point ensured adequate break-up of the glass bundles and dispersion of the individual glass fibers in the molten blend. An amount of 15 weight percent of the entire mass was glass that was added, thus the totals in the following table add up to 85%, not 100%.

The results of the experiments recorded below demonstrate a further improvement can be made with greater than the calculated theoretical amount necessary for 100% neutralization.

**Table 9**

| Weight % Nylon A | Weight % SPS D | Weight % Compatibilizer | Compatibilizer | Theoretical % Neutralization of Compatibilizer | % Elongation |
|---|---|---|---|---|---|
| 41 | 27 | 17 | Prior Art Compatibilizer A | 0 | 2.0 |
| 41 | 27 | 17 | B | - | 2.9 |
| 41 | 27 | 17 | C | 100 ZnO | 3.5 |
| 41 | 27 | 17 | C | 150 ZnO | 4.3 |
| 21-Nylon A 20-Nylon B | 27 | 17 | C | 100 ZnO | 5.5 |

### Example 6

The experiments below demonstrate that a variety of metal counter ions may be used to neutralize the experimental compatibilizer.

**Table 10**

| Weight % Nylon A | Weight % SPS D | Weight % Compatibilizer | Compatibilizer | Theoretical % Neutralization of Compatibilizer | % Elongation |
|---|---|---|---|---|---|
| 41 | 27 | 17 | Prior Art Compatibilizer A | 0 | 2.0 |
| 41 | 26 | 18 | C | 0 | 2.1 |
| 41 | 26 | 18 | C | 150 ZnO | 3.3 |
| 41 | 26 | 18 | C | 150 LiOH | 3.6 |
| 41 | 26 | 18 | C | 150 Mg(OH)₂ | 4.7 |
| 41 | 26 | 18 | D | 0 | 2.0 |
| 41 | 26 | 18 | D | 150 ZnO | 4.4 |
| 41 | 26 | 18 | D | 150 LiOH | 3.8 |
| 41 | 26 | 18 | D | 150 Mg(OH)₂ | 4.7 |
| 41 | 26 | 15 3 | D A | 150 Mg(OH)₂ | 3.7 |
| 41 | 26 | 12 3 3 | D Prior Art B E/MA 73/27 | 150 Mg(OH)₂ | 4.7 |

### Example 7

In preparing blends of several polymers, whether for toughening or other purposes, sequence of addition may have an effect. The following examples illustrate several processing variations. A blend of 13% nylon A, 27% SPS D, and 17% compatibilizer C with sufficient ZnO present to enable 100 % neutralization were blended in the rear of a 30mm twin screw extruder. The glass (15%) and remaining nylon, 28 %, was added as a concentrate where the glass had previously been dispersed. The elongation was 5.3 %. When all of the nylon was added in the rear of the extruder, the elongation was 4.3%.

The SPS and thermoplastic resin may be previously rubber toughened, glass reinforced or contain a filler prior to being blended. Preferred thermoplastic resins included nylon 6, nylon 66, polybutylene terephthalate, and polyethylene terephthalate.

## Claims

1. A composition comprising:
(a) at least 1% by weight of a syndiotactic polystyrene;
(b) at least 1% by weight of a thermoplastic resin; and
(c) from 1 to 30% by weight of a compatibilizer which is a polyethylene interpolymer functionalized with a carboxylic acid group which is partially or fully neutralized by a metal counter ion,
wherein the sum of the weight percentages of (a), (b) and (c) equals 100%, and said thermoplastic resin is selected from the group consisting of polyamides and polyesters.

2. A composition of claim 1 wherein said metal counter ion is selected from the group consisting of zinc, magnesium, manganese and lithium.

3. A styrene-based composition which comprises (a) at least 20% by weight of a styrene-based polymer having a syndiotactic configuration, (b) at least 20% by weight of a thermoplastic resin, (c) 2 to 25% by weight of a compatibilizer which is a polyethylene interpolymer functionalized with a carboxylic acid group which is partially or fully neutralized by a metal counter ion, and (d) 0 to 50% by weight of an organic or inorganic filler based on the total weight of the composition, wherein the sum of the weight percentages (a), (b), (c) and (d) equals 100% and said thermoplastic resin is selected from the group consisting of polyamides and polyesters.

4. The composition of claim 3 wherein said filler is glass.

5. A shaped article prepared from the composition of claim 1.

## Patentansprüche

1. Zusammensetzung, umfassend:
(a) mindestens 1 Gew.-% eines syndiotaktischen Polystyrols;
(b) mindestens 1 Gew.-% eines thermoplastischen Harzes; und
(c) von 1 bis 30 Gew.-% eines Kompatibilisierungsmittels, welches ein Polyethyleninterpolymer ist, funktionalisiert mit einer Carbonsäuregruppe, welche teilweise oder vollständig mit einem Metallgegenion neutralisiert ist,
wobei die Summe der Gewichtsprozentsätze von (a), (b) und (c) gleich 100% ist und das thermoplastische Harz aus der Gruppe, bestehend aus Polyamiden und Polyestern, ausgewählt ist.

2. Zusammensetzung nach Anspruch 1, wobei das Metallgegenion aus der Gruppe, bestehend aus Zink, Magnesium, Mangan und Lithium, ausgewählt ist.

3. Auf Styrol basierende Zusammensetzung, welche (a) mindestens 20 Gew.-% eines auf Styrol basierenden Polymers mit einer syndiotaktischen Konfiguration, (b) mindestens 20 Gew.-% eines thermoplastischen Harzes, (c) 2 bis 25 Gew.-% eines Kompatibilisierungsmittels, welches ein Polyethyleninterpolymer ist, funktionalisiert mit einer Carbonsäuregruppe, welche teilweise oder vollständig mit einem Metallgegenion neutralisiert ist, und (d) 0 bis 50 Gew.-% eines organischen oder anorganischen Füllstoffes, bezogen auf das Gesamtgewicht der Zusammensetzung, umfaßt, wobei die Summe der Gewichtsprozentsätze (a), (b), (c) und (d) gleich 100% ist und das thermoplastische Harz aus der Gruppe, bestehend aus Polyamiden und Polyestern, ausgewählt ist.

4. Zusammensetzung nach Anspruch 3, wobei der Füllstoff Glas ist.

5. Formgegenstand, hergestellt aus der Zusammensetzung nach Anspruch 1.

## Revendications

1. Composition comprenant:
(a) au moins 1% en poids d'un polystyrène syndiotactique;
(b) au moins 1% en poids d'une résine thermoplastique; et
(c) de 1 à 30% en poids d'un agent de compatibilité qui est un interpolymère de polyéthylène fonctionnalisé avec un groupe d'acide carboxylique qui est partiellement ou totalement neutralisé par un contre-ion métallique,
dans laquelle la somme des pourcentages en poids de (a), (b) et (c) est égale à 100% et ladite résine thermoplastique est choisie dans le groupe constitué de polyamides et de polyesters.

2. Composition suivant la revendication 1, dans laquelle ledit contre-ion métallique est choisi dans le groupe constitué de zinc, de magnésium, de manganèse et de lithium.

3. Composition à base de styrène qui comprend (a) au moins 20% en poids d'un polymère à base de styrène présentant une configuration syndiotactique, (b) au moins 20% en poids d'une résine thermoplastique, (c) de 2 à 25% en poids d'un agent de compatibilité qui est un interpolymère de polyéthylène fonctionnalisé avec un groupe d'acide carboxylique qui est partiellement ou totalement neutralisé par un contre-ion métallique, et (d) de 0 à 50% en poids d'une charge organique ou inorganique, sur la base du poids total de la composition, dans laquelle la somme des pourcentages en poids de (a), (b), (c) et (d) est égale à 100% et ladite résine thermoplastique est choisie dans le groupe constitué de polyamides et de polyesters.

4. Composition suivant la revendication 3, dans laquelle ladite charge est du verre.

5. Article façonné préparé à partir de la composition suivant la revendication 1.
